Europäisches Patentamt

European Patent Office

Office européen des brevets

(19)

(11) Veröffentlichungsnummer: **0 082 539**

A1

(12) **EUROPÄISCHE PATENTANMELDUNG**

(21) Anmeldenummer: 82111921.1

(22) Anmeldetag: 21.12.82

(51) Int. Cl.³: **F 41 G 5/20**
B 64 G 1/00, H 04 L 11/16

(30) Priorität: 22.12.81 DE 3150894

(43) Veröffentlichungstag der Anmeldung:
29.06.83 Patentblatt 83/26

(84) Benannte Vertragsstaaten:
IT

(71) Anmelder: BLOHM + VOSS AG
Hermann-Blohm Strasse 3
D-2000 Hamburg 11(DE)

(72) Erfinder: Sadler, Karl-Otto
Kroneweg 21
D-2000 Hamburg 72(DE)

(72) Erfinder: Schmidt, Willy
Heideweg 13
D-2081 Ellerbek(DE)

(74) Vertreter: Dipl.-Phys.Dr. Manitz Dipl.-Ing. Finsterwald
Dipl.-Ing. Grämkow Dipl.-Chem.Dr. Heyn
Dipl.-Phys.Rotermund Morgan B.Sc.(Phys.)
Robert-Koch-Strasse 1
D-8000 München 22(DE)

(54) Kampfschiff mit Funktionseinheitsanlagen.

(57) Ein Kampfschiff mit einzelnen Funktionseinheitsanlagen und einer zentralen Befehlsstellenanlage weist unabhängig von der Art von an einzelnen Einheitsplattformen angeordneten Anlagen Einheits-Informationsübertragungsleitungen auf. Innerhalb jeder Funktionseinheitsanlage (11, 12 bis 31) ist ein Datenverarbeitungsgerät (11', 11", 12' bis 31') vorgesehen. Die abzugebenden Informationen werden in eine für die Übertragung über die Einheits-Informationsübertragungsleitung geeignete Form gebracht. Außerdem werden die über die Einheits-Informationsübertragungsleitung empfangenen Informationen in eine für die Verarbeitung in der Funktionseinheitsanlage (11, 12 bis 31) geeignete Form überführt.

./...

Die Erfindung betrifft ein Kampfschiff nach dem Oberbegriff des Patentanspruchs 1.

Bei einem bekannten Kampfschiff dieser Art (DE-PS 20 56 069) wird eine wesentliche Rationalisierung bei der Herstellung dadurch erzielt, daß die Waffen-, Feuerleit-, Beleuchtungs- und/oder Ortungsanlagen außerhalb des Schiffes in Spezialbetrieben auf Einheitsplattformen vorgefertigt werden und dann nur noch die mit der Anlage versehene Einheitsplattform auf das im Schiffskörper vorgesehene Einheitsfundament eingesetzt zu werden braucht. Das bekannte Funktions-Einheitssystem gestattet aber nicht nur eine wirtschaftliche Herstellung von Kampfschiffen, sondern ermöglicht es auch, veraltete Anlagen auf einfache Weise auszuwechseln, indem einfach die die alte Anlage tragende Einheitsplattform vom Einheitsfundament abgenommen und durch eine mit einer modernisierten oder neuen Anlage versehene Plattform ersetzt wird. Dies kann innerhalb einer sehr kurzen Zeit von wenigen Tagen geschehen, während früher hierzu monatelange Umrüstarbeiten erforderlich waren. Auch die modernisierte oder neue Anlage kann nämlich auf einer passenden Einheitsplattform vorher in einem Spezialbetrieb vorgefertigt werden.

Sofern das außerhalb des Containers befindliche Gerät, z.B. eine auf einem Mast befindliche Antenne, relativ hoch über dem Schiffsdeck anzuordnen ist, kann der Container an geeigneter Stelle im Schiff untergebracht und über eine Leitung mit dem an entfernter Stelle aufgebauten Gerät verbunden sein. Auch die Befehlsstellenanlage wird vorzugsweise in einem Container im Innern des Schiffes untergebracht.

Bei allen hier erwähnten Anlagen handelt es sich um Funktionseinheitsanlagen, womit zum Ausdruck gebracht werden soll, daß möglichst sämtliche für die Funktion der Anlage erforderlichen Elemente in der Anlage in möglichst kompakter Form ent- halten sind, sodaß insbesondere eine komplette Auswechslung einer Anlage ohne große Demontagearbeiten möglich ist. Insbesondere sind die Funktionseinheitsanlagen in Containern untergebracht, welche - sofern sie sich nicht im Innern des Schif- fes befinden - oben durch die erwähnte Einheitsplattform abgeschlossen sein sollen, auf der dann das zu der Anlage gehörende Gerät (z.B. eine Rohrwaffe) befestigt ist. Es können auch zwei oder mehr unterschiedliche Einheitsfundament-Einheitsplattformtypen (z.B. unterschiedlicher Abmessungen) vorgesehen sein.

Ein Problem bei dem bekannten Funktions-Einheitssystem besteht jedoch darin, daß zwischen den einzelnen Anlagen des Schiffes untereinander und zwischen den Anlagen und der Befehlsstellenanlage Informations-Übertragungsleitungen in sehr großer Anzahl vorhanden sein müssen. Derzeit müssen beispielsweise ca. 200 km Datenkabel innerhalb des Schiffes verlegt werden, um sämtliche Informationsübertragungen zwischen den Anlagen und der Befehlsstellenanlage vornehmen zu können.Hierzu müssen Kabelbahnen gebaut und die Kabel verlegt, gehaltert, an den Schotten vergossen und mit Steckern versehen werden. Dies bedeutet nicht nur einen ganz erheblichen Arbeitsaufwand sondern bedingt auch eine ganz erhebliche Zunahme des Schiffsgewichtes, was unerwünscht ist. Besonders nachteilig ist es, daß beim Ersetzen von alten Anlagen durch modernisierte oder neue bis auf die Stromversorgung die Verkabelung weitgehend neu durchgeführt werden muß. Trotz der durch das Funktions-Einheitssystem geschaffenen Vorteile stellt dies einen erheblichen Nachteil dar, wobei zu bedenken ist, daß einige der Funktions-Einheitsanlagen bis zu 40 Steckern mit jeweils bis zu 40 Stiften benötigen, um den erforderlichen Informationsaustausch zu anderen Anlagen oder zur Befehlsstelle vornehmen zu können.

Das Ziel der Erfindung besteht somit darin, ein Kampfschiff der eingangs genannten Gattung zu schaffen, bei dem die mechanische Standardisierung durch Schaffung von Funktionseinheitsanlagen und insbesondere von Einheitsfundamenten und die Anlagen tragenden Einheitsplattformen durch eine elektronische Standardisierung ergänzt wird, welche es ermöglicht, nicht nur mit einem erheblich herabgesetzten Kabelaufwand zwischen den Anlagen und der Befehlsstelle auszukommen, sondern es darüberhinaus entbehrlich macht, daß beim Ersetzen einiger oder aller Funktionseinheitsanlagen durch ebenfalls in Einheitscontainern, insbesondere auf Einheitsplattformen montierte neue oder modernisierte Funktionseinheitsanlagen jeweils eine neue Verkabelung stattfinden muß.

Zur Lösung dieser Aufgabe sieht die Erfindung vor, daß unabhängig von der Art der an den einzelnen Einheitsplattformen angeordneten Anlagen zwischen den Funktionseinheitsanlagen einer Funktionsgruppe Einheits-Informationsübertragungsleitungen verlegt sind und daß innerhalb jeder Funktionseinheitsanlage ein Datenverarbeitungsgerät vorgesehen ist, welches die abzugebenden Informationen in eine für die Übertragung über die Einheits-Informationsübertragungsleitung geeignete Form und die über die Einheits-Informationsübertragungsleitung empfangenen Informationen in eine für die Verarbeitung in der Funktionseinheitsanlage geeignete Form bringt.

Erfindungsgemäß werden also die in das Schiff fest einzubauenden Einheitsfundamente durch ein Einheits-Übertragungsleitungs-System ergänzt, welches ebenso wie die Einheitsfundamente fest ins Schiff eingebaut wird und für sämtliche mittels Einheitsplattformen in die Einheitsfundamente eingebaute Anlagen benutzbar ist. Das Einheits-Informationsübertragungsleitungs-System ist lediglich dadurch in gewissem Maße individualisiert, daß in bestimmte Einheitsfundamente nur z.B. Feuerleitanlagen, in andere Einheitsfundamente nur z.B. Überwasser- oder Unterwasser-Waffenanlagen bzw. an bestimmten Stellen im Schiff die Befehlsstellenanlage, eine Feuerleitanlage o.dgl. einzubauen sind. Mit anderen Worten ist in jedes Einheitsfundament immer nur eine bestimmte Anlagenart wie z.B. eine Waffen- oder eine Ortungsanlage einzubauen, wobei jedoch aufgrund des erfindungsgemäßen Einheits-Informationsübertragungsleitungs-Systems im übrigen die Art oder der spezielle Aufbau der Anlage gleichgültig ist, denn durch das in die Anlage eingebaute Datenverarbeitungsgerät können sämtliche Daten in eine für das Einheits-Informationsleitungs-Systems kompatible Form gebracht werden.

So ist es ohne das Erfordernis einer neuen Verkabelung
beispielsweise möglich, eine veraltete Rohrwaffe durch eine
moderne Raketenwaffe oder eine moderne Feuerleitanlage statt
einer veralteten mittels einer Einheitsplattform in ein
Einheitsfundament einzusetzen. Auch kann eine in einem Container enthaltene
Befehlsstellenanlage jederzeit durch eine neue ersetzt werden.

Von besonderer Bedeutung für die Herabsetzung des Verkabelungsaufwandes ist es, daß zwischen den Anlagen nur noch Rohinformationen ausgetauscht werden, welche durch das für jede Anlage
individuell vorgesehene Datenverarbeitungsgerät nicht bereitgestellt werden kann. Es entfällt somit jede vermeidbare
Informations- und Datenübertragung zwischen den Anlagen untereinander bzw. den Anlagen und der Befehlsstelle.

Bei den Rohinformationen kann es sich z.B. im Falle einer Waffe
um den Vorhalt, die Ballistik, munitionsspezifische Daten
oder Beschränkungen des Waffenschußbereichs handeln.

Die auf diese Weise bewirkte Dezentralisierung der Anlagensteuerung hat den großen Vorteil, daß bei Zerstörung der
Operationszentrale im Kampf die einzelnen Anlagen in beschränktem Umfang noch funktionsfähig bleiben. Hierzu können
nach einer bevorzugten Ausführungsform an jeder gesteuerten
Anlage Tastaturen für die Handsteuerung vorgesehen sein.
Die einzelne Waffe kann so noch mit dieser Tastatur bedient
werden, weil die für die spezielle Waffe charakteristischen
Daten in dem ihr zugeordneten Datenverarbeitungsgerät in
dezentralisierter Form vorhanden sind.

Normalerweise erfolgt die Steuerung der Waffe jedoch
von der Feuerleitanlage aus, welche über die Einheits-
Informationsübertragungsleitung die Rohinformation wie
z.B. Richtung und Entfernung liefert.

Aufgrund der erfindungsgemäßen Ausbildung gelingt es,
den Verkabelungsaufwand gegenüber dem bekannten Funktions-
Einheitssystem auf ein Drittel bis ein Viertel herabzusetzen.

Aufgrund der Zuordnung eines individuellen Datenverarbeitungsgerätes zu jeder Anlage gelingt es grundsätzlich,
statt mit bisher etwa 30 Informationskabeln mit einem einzigen
Kabel auszukommen. Aus Gründen der Redundanz arbeitet man jedoch im allgemeinen auch bei dem neuen System mit zwei bis
fünf Informationskabeln.

Als Kabel für das erfindungsgemäße Einheits-Informationsübertragungsleitungs-Systemeignen sich sowohl klassische Kabel
als auch Koaxialkabel oder insbesondere Glasfaserkabel,
welche besonders hohe Datengeschwindigkeiten zulassen.

Für die Schaffung einer Redundanz ist es weiter vorteilhaft,
wenn die Datenverarbeitungsgeräte so ausgebildet sind, daß
jede der mehreren Einheits-Informationsübertragungsleitungen
zwischen zu unterschiedlichen Funktionsgruppen gehörenden
Anlagen die Gesamtinformationsübertragung übernehmen kann.
Beim Ausfall einer Einheits-Informationsübertragungsleitung
zwischen zwei Anlagen kann somit die andere Leitung die
gesamte Informationsübertragung übernehmen, was zwar etwas
langsamer geht, aber nach wie vor einen vollständigen Informationsfluß gewährleistet.

Besonders vorteilhaft ist es, wenn die Einheits-Informationsübertragungsleitungen alle Anlagen einer Funktionsgruppe zu
einem Ring verbinden. Die Informationen werden dabei auf
zwei Wegen von einer Anlage zur anderen bzw. von der Befehlsstelle zu einer Anlage übertragen, so daß bei Unterbrechung
des Ringes an irgendeiner Stelle nach wie vor noch der volle
Informationsfluß gewährleistet ist.

Zur Erhöhung der Redundanz können jedoch zwischen bestimmten
Anlagen einer Funktionsgruppe und/oder der Befehlsstelle zusätzliche Einheits-Informationsübertragungsleitungen verlegt
sein, was von der Bedeutung der betreffenden Anlage für das
Gesamtsystem abhängt.

Wie bereits erwähnt wurde, können mehrere Einheits-Informationsübertragungsleitungen elektrisch parallel, jedoch räumlich
getrennt verlegt sein, um im Falle der Zerstörung eine zusätzliche Sicherheit für die Informationsübertragung zu gewährleisten.

Besondere Bedeutung im Zusammenhang mit der Erfindung kommt
der Erkenntnis zu, daß zur Schaffung eines einheitlichen
Informationsübertragungsleitungs-Systemsdie Anlagen in Funktionsgruppen einzuteilen sind. In Funktionsgruppen einander zugeordnet werden steuernde Anlagen (Sensoren) und von ihnen gesteuerte
Anlagen (Effektoren). Z.B. wird eine Raketensteuerungsanlage
mit einer Raketenabschußanlage oder eine Torpedosteuerungsanlage
mit einer Torpedoabschußanlage zu einer Funktionsgruppe zusammengefaßt.

Eine praktische Realisierung des Erfindungsgedankens sieht vor,
daß die Feuerleitanlagen für die Überwasser-Waffenanlagen sowie
die Befehlsstellenanlage eine erste Funktionsgruppe bilden, wobei
vorzugsweise bei mehreren, insbesondere vier Feuerleitanlagen
von einigen, insbesondere zwei dieser Feuerleitanlagen mindestens
eine Einheits-Informationsübertragungsleitung direkt zur Befehlsstellenanlage verläuft und insbesondere bei mehreren, insbesondere sieben Überwasser-Waffenanlagen von einigen, insbesondere zwei dieser Überwasser-Waffenanlagen mindestens eine Einheits-Informationsübertragungsleitung direkt zur Befehlsstellenanlage verläuft.

Weiter ist es zweckmäßig, wenn die Feuerleitanlagen für die Unterwasser-Waffen sowie die Befehlsstellenanlage eine zweite Funktionsgruppe bilden.

Auch die Kommunikationsanlagen sowie die Befehlsstellenanlage sollen eine dritte Funktionsgruppe bilden.

Schließlich sollen die Feuerleitanlagen, die Befehlsstellenanlage und eine Navigationsanlage eine vierte Funktionsgruppe bilden, welche auf einem Schiff von besonderer Bedeutung ist. Zu der vierten Funktionsgruppe sollen auch die Raketen- und/oder Torpedo-Anlagen und gegebenenfalls wenigstens eine Kommunikationsanlage gehören.

Ein besonderer Vorteil der Erfindung besteht darin, daß die heutzutage noch weitgehend analog arbeitenden Anlagen auf Schiffen durch in die Datenverarbeitungsgeräte eingebaute Analog-Digital-Wandler ohne weiteres für das erfindungsgemäße Einheits-Informationsübertragungsleitungs-System geeignet gemacht werden können. Bei zukünftigen, von vornherein digital arbeitenden Anlagen ist jedoch die Kompatibilität zum erfindungsgemäßen Einheits-Informationsübertragungsleitungs-System von vornherein gegeben.

Vorzugsweise ist am Schiff ein Landanschluß vorgesehen, über den einige oder alle Funktionsgruppen an einen externen Simulations-, Diagnose- und/oder Auswerterechner anschließbar sind.

Der Erfindungsgedanke kann auch dahingehend zum Ausdruck gebracht werden, daß die Funktionseinheiten nach der DE-PS 20 56 069 mit einer eigenen Intelligenz zur Ver- bzw. Bearbeitung und zur Verteilung bzw. Weiterleitung von Daten ausgerüstet werden. Durch die sehr viel höhere Übertragungsgeschwindigkeit des mittels der Datenverarbeitungsgeräte digitalisierten Informationsaustausches zwischen den die Funktionseinheiten bildenden, auf Einheitsplattformen montierten Anlagen lassen sich erheblich mehr Daten pro Zeitintervall übertragen, was die Realisierung eines umfangreicheren Informationsaustausches bei herabgesetztem Kabelaufwand bedeutet. Die für jede Anlage vorgesehene, individuelle Intelligenz übernimmt dabei die Umsetzung der digitalen Informationen im Daten-Buss in analoge Informationen für die Bearbeitung in der Anlage und umgekehrt.

Die an den Einheitsplattformen angebrachten Anlagen sind in Containern untergebracht, welche unterhalb der Plattform die Form eines Quaders haben und oben auf der Plattform eine zu der Anlage gehörende Waffe, ein Ortungsgerät oder dergleichen tragen.

Aufgrund der ringförmigen Zusammenfassung der zu einer Funktionsgruppe gehörenden Anlagen können alle erzeugten Informationen an jede Anlage der Funktionsgruppe gelangen. Die Be- und Verarbeitung erfolgt unabhängig davon, ob diese Information gemäß dem jeweiligen Systemkonzept benötigt wird oder nicht.

Das für jede an einer Einheitsplattform montierte Anlage standardisierte Datenverarbeitungsgerät verfügt über alle gebräuchlichen Anpassungen für den Informationsaustausch mit der Anlage und über ein normiertes Verfahren für den Austausch von Informationen zwischen verschiedenen Anlagen.

Aus diesem Grunde läßt sich der Aufwand für die Verkabelung zwischen den Anlagen minimieren. Insgesamt ermöglicht es das erfindungsgemäße Einheits-Informationsübertragungs-Leitungs-System gegenüber den klassischen Datenübertragungssystemen eine erheblich erhöhte Redundanz.

Durch die Möglichkeit der Verwendung von Programmen zur Fehlersuche, Ausbildung, Systemabstimmung und Simulation innerhalb der einzelnen Datenverarbeitungsgeräte lassen sich diese personal- und zeitintensiven Tätigkeiten sinnvoll unterstützen bzw. schneller durchführen.

Mittels der Simulationsprogramme innerhalb der Datenverarbeitungsgeräte der einzelnen Anlage werden alle benötigten externen Informationen erzeugt. Auf dieser Basis können Funktionsteste der Anlagen durchgeführt werden, ohne daß die sonst erforderlichen externen Anlagen und Geräte zur Verfügung stehen.

Der Austausch von mit Anlagen bestückten Einheitsplattformen, beispielsweise von Waffen- oder Feuerleitanlagen zum Zwecke einer Umrüstung oder späteren Modernisierung ist unter Benutzung des gleichen Einheits-Informationsübertragungsleitungs-Systems ohne weiteres möglich. Es ist lediglich erforderlich, die Einheits-Datenverarbeitungsgeräte innerhalb der einzelnen Anlagen entsprechend aufzubauen.

Die Datenverarbeitungsgeräte der einzelnen Anlagen werden durch eine Informations-, Rechen- und Speichereinheit gebildet, welche modular aufgebaut ist.

Diese Module sind so aufgebaut, daß sie Rechnereinheiten, Speichereinheiten, Stromversorgungen und Interface-Module zur Prozeßsteuerung, zum Verknüpfen der Anlagen untereinander und zum Verknüpfen der Anlagen mit der Befehlsstelle enthalten.

Die erfindungsgemäße Anordnung ermöglicht es, die Arbeitsweise beliebig vieler Anlagen auf einfache Weise zu simulieren, um die Arbeit des Gesamtsystems zu testen.

Von besonderer Bedeutung ist es wie gesagt, daß eine bestimmte Anlage, wenn sie mit dem übrigen System nicht mehr kommunizieren kann, selbständig weiterarbeiten kann.

Der Zeittakt wird von einer internen Uhr übernommen, während sich verändernde Daten durch Extrapollation für eine bestimmte Zeit fortgeschrieben werden. Die Datenverarbeitungsgeräte lassen sich bei der Wartung einer Funktionseinheit auch als Justierhilfsmittel einsetzen; beispielsweise kann man in einem bestimmten Zeittakt Steuerimpulse erzeugen, um ein halbautomatisches Meßverfahren zu realisieren. Das gesamte System besteht aus standardisierten Hard-und Soft-Ware-Modulen. Das schafft günstige Voraussetzungen für die Logistik und erleichtert die Wartung der Hard-Ware und die Plege der Soft-Ware.

Die Standardisierung der Soft-Ware bezieht sich nicht nur auf eine Vereinheitlichung der Programme, sondern auch auf eine Normierung der übermittelten Informationen, d.h., es wird ein einheitliches Format der Datensätze gewährleistet.

Als Option läßt sich läßt sich jedes Datenverarbeitungsgerät mit einem zusätzlichen Audiokanal ausrüsten. Damit können über A/D-Wandler und die Kanäle des Informationsnetzes Sprachinformationen von einer Anlage (Funktionseinheit) zu jeder beliebigen anderen Anlage übertragen werden. Das ist eine wertvolle Möglichkeit insbesondere bei der Inbetriebnahme und bei Tests. Eine weitere wichtige Testhilfe ist ein Anschluß für ein Taschen-Terminal als kombiniertes Ein-/Ausgabegerät für die Prüfung der Datenverarbeitungsgeräte und des Gesamtsystems.

Nachträgliche Änderungen des Informationsnetzes sind jederzeit, auch nach Inbetriebnahme des Schiffes durch den modularen Aufbau des Systems möglich.

Das Informationsnetz arbeitet autonom. Es gibt innerhalb des Netzes keine Datenverarbeitungsgeräte, die gegenüber anderen Datenverarbeitungsgeräten übergeordnete Steuerfunktionen ausüben. Jedes Datenverarbeitungsgerät sendet relevante Daten an alle anderen Datenverarbeitungsgeräte und nimmt von allen anderen Datenverarbeitungsgeräten Daten auf, sofern die betreffenden, den Datenverarbeitungsgeräten zugeordneten Anlagen einer gemeinsamen Funktionsgruppe angehören.

Geeignete Algorithmen sorgen dafür, daß für alle Datenverarbeitungsgeräte die für sie relevanten Daten rechtzeitig verfügbar sind, daß schnelle Daten Priorität von langsamen Daten haben, daß gestörte Übertragungskanäle erkannt und gemeldet werden und daß bei überlasteten oder ausgefallenen Kanälen alternative Wege gesucht werden.

Wenn ein Kanal während einer Datenübertragung ausfällt, wird dies erkannt, und die bereits übertragene Teilmenge wird verworfen. In einem definierten Bereich befindet sich ein Backup der Information, mit der die Übertragung erneut begonnen wird.

Die Erfindung schafft somit für die durch die DE-AS 20 56 069 geschaffene Standard-Schnittstelle zwischen Anlage und Schiff (Einheitsfundament) eine Standard-Schnittstelle für die Elektronik, in dem ein der Anlage zugeordnetes individuelles Datenverarbeitungsgerät an das Einheits-Informationsübertragungsleitungs-System angeschlossen wird.

Die Übertragungssysteme arbeiten mit adressierten Daten. Es können Mikroprozessoren für asynchrone Datenübertragung, Multiplexverfahren oder Paralleldatenübertragung verwendet werden. Für letztere eignen sich spezielle Kabel mit beispielsweise 16 Adern.

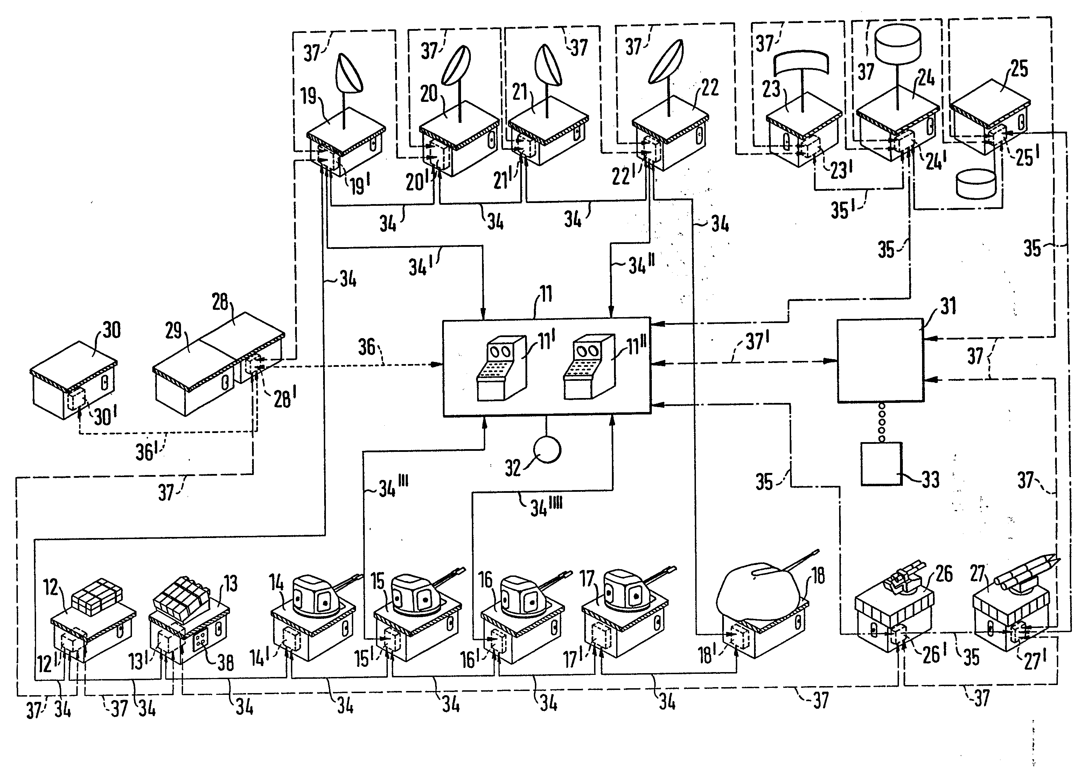

Die Erfindung wird im folgenden beispielsweise anhand der
Zeichnung beschrieben, deren einzige Figur ein schematisches
Blockschaltbild der in einem erfindungsgemäßen Kampfschiff enthaltenen, auf Einheitsplattformen angeordneten Anlagen und des
diesem zugeordneten Einheits-Informationsübertragungsleitungs-
System zeigt.

Nach der Zeichnung befindet sich im Schiff an zentraler Stelle,
beispielsweise auf der Brücke eine Befehlsstellenanlage 11, in der
z.B. zwei Datenverarbeitungsgeräte 11', 11" vorgesehen sind.
An der Befehlsstellenanlage wird von einer oder mehreren Personen
eingegeben, welches Ziel verfolgt und bekämpft werden soll.
Die Befehlsstelle 11 empfängt von einer Navigationseinheit 31,
welche Kompasse, ein Log, einen Windmesser, einen Deckernavigator, einen Omega-Navigator, einen Satelliten-Navigator etc.
enthält, die für die Richtung des Schiffes gegen Nord repräsentativen Signale, ein Geschwindigkeitssignal, ein Windgeschwindigkeitssignal etc. Auf entsprechenden Tochter-Anzeigegeräten
in der Befehlsstellenanlage 11 können die entsprechenden Werte
abgelesen werden.

Auf in nicht dargestellten Einheitsfundamenten des Schiffes
angeordneten Einheitsplattformen bzw. Einheitscontainern befinden sich verschiedene Anlagen wie folgt:

    Raketenabschußanlage (ASPIDE) 12
    Raketenabschußanlage (OTOMAT) 13
    40 mm Kanone 14
    40 mm Kanone 15
    40 mm Kanone 16
    40 mm Kanone 17
    127 mm Kompaktkanone 18

Feuerleitanlage (STIR) 19

Feuerleitanlage (LIOD) 20 (Steuerbord)

Feuerleitanlage (LIOD) 21 (Backbord)

Feuerleitanlage (WM 25) 22

Radaranlage (DA 08) 23

Raketensteueranlage (ECM/ESM) 24

Torpedosteuerungsanlge (SONAR) 25

Unterwasser-Raktenabschußanlage 26

Torpedoabschußanlage 27

Kommunikationszentralen-Container 28, 29

Fernmeldegeräte-Container 30.


Ein Sensorsystem 33 nimmt die Schiffsmaschinendaten auf und
liefert sie an die Navigationseinheit 31.


Mit 32 ist ein Landanschluß bezeichnet, mittels dessen das
gesamte System mit einem externen Simulations-, Diagnose- und/oder
Auswerterechner verbunden werden kann, welcher nicht dargestellt
ist.

                    auch
Erfindungsgemäß ist /in jedem Einheitscontainer bzw. in jeder an
einer Einheitsplattform angeordneten Anlage ein individuelles
Datenverarbeitungsgerät 12', 13', 14', ... 26', 27', 28' bzw.
30' angeordnet.


Die Datenverarbeitungsgeräte enthalten Speicher, in denen alle
für die zugehörige Anlage selbst spezifischen Daten abgespeichert
sind. Bei den Waffenanlagen 12 bis 18 und 26, 27 kann es sich
hierbei z.B. um den Vorhalt, die Ballistik, munitionsspezifische
Daten, Beschränkungen für den Schußbereich der Waffen etc. handeln.


Auf diese Weise braucht der einzelnen Waffenanlage lediglich noch
eine relativ einfach zu übermittelnde Rohinformation zugeführt
zu werden, welche im wesentlichen aus einem Richtungs- und Entfernungssignal besteht.

Um diese Übermittlung durchzuführen sind die Überwasser-Waffenanlagen 12, 13, 14, 15, 16, 17 und 18 mit den ihnen zugeordneten Feuerleitanlagen 19, 20, 21, 22 als einheitliche Funktionsgruppe zu einem Ringsystem zusammengefaßt, in dem jeweils die
Datenverarbeitungsgeräte aufeinanderfolgender Anlagen durch
in ausgezogenen Linien gezeigte Einheits-Informationsübertragungsleitungen 34 miteinander verbunden sind. Bei dem dargestellten
Ausführungsbeispiel sind also jeweils die Datenverarbeitungsgeräte 12', 13',14', 15', 16', 17', 18', 22', 21', 20', 19', 12'
durch je eine Einheits-Informationsübertragungsleitung 34 miteinander verbunden. In dieses Ringleitungssystem könnte auch
die Befehlsstellenanlage 11 einbezogen sein. Im vorliegenden Fall ist
jedoch die Befehlsstellenanlage 11 über eine Leitung 34' mit dem Datenverarbeitungsgerät 19' der Feuerleitanlage 19, über eine weitere
Einheits-Informationsübertragungsleitung 34" mit dem Datenverarbeitungsgerät 22', über eine weitere Leitung 34"' mit dem Datenverarbeitungsgerät 15' der Rohrwaffenanlage 15 und schließlich über eine vierte Einheits-Informationsübertragungsleitung
34"" mit dem Datenverarbeitungsgerät 16' der Rohrwaffe 16 verbunden.

Über die Einheits-Informationsübertragungsleitungen wird von
der Befehlsstellenanlage 11 den Feuerleitanlagen 19 bis 22 durch digitalisierte Signale mitgeteilt, welches Ziel verfolgt werden soll.
Da über die Leitungen 34', 34" adressierte Daten gesendet werden,
können sich die Datenverarbeitungsgeräte 19', 20', 21', 22'
die für sie bestimmten Signale aus der übertragenen Signalgesamtheit heraussuchen.

Durch diese Steuersignale wird auch bestimmt, welche der Über-
wasser-Waffen 12, 18 welcher der Feuerleitanlagen 19, 22 zugeordnet wird.

Anschließend übermitteln dann die Datenverarbeitungsgeräte
19' bis 22' der Feuerleitanlagen 19, 22 die erforderlichen
Steuersignale an die Datenverarbeitungsgeräte 12' bis 18'
der Überwasser-Waffen 12 bis 18. Von jeder Feuerleitanlage
aus gesehen stehen hierfür über das Ringleitungssystem 34
zwei Wege (in beiden Richtungen des Ringes) zur Verfügung,
so daß bei irgendeiner Unterbrechung des Ringes z.B. durch einen
Geschoßtreffer noch ein zweiter Weg für die Signalübertragung
zur Verfügung steht.

Beim vorliegenden Ausführungsbeispiel wird weiter noch eine
erhebliche Redundanz durch die Sternleitungen 34' bis 34""
geschaffen.

Als Datenverarbeitungsgeräte eignen sich Mikroprozessoren für
asynchrone Datenübertragung, Multiplexgeräte oder Paralleldatenübertragungsgeräte, wobei entweder klassische Kabel,
Koaxialkabel oder Glasfaserkabel als Einheits-Informationsübertragungsleitungen 34, 34', 34", 34"' bzw. 34"" verwendet
werden können.

Aufgrund der Anordnung von Datenverarbeitungsgeräten sowohl
in der zentralen Befehlsstellenanlage 11 als auch in jeder einzelnen
Funktionseinheit bzw. jeder einzelnen Anlage können unabhängig
von der speziellen Art der einzelnen Anlage die von der Befehlsstelle 11 zu den Anlagen oder zwischen den Anlagen zu übertragenden Informationen stets in eine solche Form gebracht werden,
daß mit ein und demselben Einheits-Informationsübertragungsleitungs-System 34, 34', 34", 34"' bzw. 34"" auszukommen ist.
Dies gilt auch dann, wenn eine der Anlagen durch eine modernisierte oder neue Anlage ersetzt wird.

Wesentlich ist jedoch, daß in der beschriebenen Weise die
Feuerleitanlagen 19 bis 22 mit den Überwasser-Waffen 12 bis 18
zu einer ersten Funktionsgruppe zusammengefaßt sind.

Aufgrund der erfindungsgemäßen Anordnung jeweils einer eigenen
Intelligenz in den einzelnen Anlagen wird nicht nur eine einheitliche Verkabelung innerhalb des Schiffes ermöglicht,
welche auch beim Austausch einiger Anlagen beibehalten werden
kann; vielmehr wird auch der Gesamtaufwand an Kabelmaterial
wesentlich herabgesetzt, z.B. auf ein Drittel bis ein Viertel
des bei einem klassischen System erforderlichen Verkabelungsaufwandes.

Die Feuerleitanlagen 23, 24, 25 für die Unterwasser-Waffen
(Unterwasser-Raketenanlage 26 und Torpedoabschußanlage 27)
sind erfindungsgemäß zu einer zweiten Funktionsgruppe zusammengefaßt, deren Einheits-Informationsübertragungsleitungen 35 strichpunktiert wiedergegeben sind. Von der Befehlsstellenanlage 11 führt die
Ringleitung 35 über das Datenverarbeitungsgerät 24' der Feuerleitanlage 24 zum Datenverarbeitungsgerät 25', von dort zum
Datenverarbeitungsgerät 27' der Torpedoabschußanlage 27, von
dort zum Datenverarbeitungsgerät 26' der Unterwasserraketenabschußanlage 26 und von dort schließlich zurück zur Befehlsstellenanlage 11,   so daß wieder eine durch eine Einheits-Informationsübertragungsleitung 35 verbundene Funktionsgruppe mit den gleichen
Vorteilen vorliegt, wie dies anhand des durch die Ringleitung 34
verbundenen Systems oben beschrieben wurde.

Eine für alle Sensoren vorgesehene Radaranlage 23 ist mit dem
in sie eingebauten Datenverarbeitungsgerät 23' über eine Leitung
35' mit dem Datenverarbeitungsgerät 24' der Feuerleitanlage 24
verbunden.

Über die Einheits-Informationsübertragungsleitungen 35, 35'
werden zu den Waffenanlagen 26, 27 Waffensteuerungsdaten in
digitalisierter Form übertragen, wobei die Signale ebenfalls
nur aus Rohinformationen bestehen, während alle  für die
Waffen 26, 27 spezifischen Gegebenheiten in den Datenverarbeitungsgeräten 26', 27' eingespeichert sind.

Eine dritte Funktionsgruppe wird durch Kommunikationszentralen-Anlagen 28, 29 und einen Container 30 mit Fernmeldegeräten gebildet. Das Datenverarbeitungsgerät 28' der Anlage 28 und das Datenverarbeitungsgerät 30' der Fernmeldegeräte-Anlage 30 sind über gepunktet dargestellte Einheits-Informationsübertragungsleitungen 36, 36' mit der Befehlsstellenanlage 11 bzw. miteinander verbunden. Über die Leitungen 36, 36', welche grundsätzlich auch zu einer Ringleitung vervollständigt werden könnten, werden Kommunikationsdaten wie Fernschreibdaten, Befehlsübermittlung innerhalb und außerhalb des Schiffes etc. übertragen.

Von ganz besonderer Bedeutung auf einem Schiff ist die Navigationsanlage 31, welche in digitalisierter Form Kompaß-, Schiffsgeschwindigkeits-,Windgeschwindigkeits- usw. -Signale abgibt.
Die von der Navigationsanlage 31 gespeisten Anlagen bilden eine vierte Funktionsgruppe, welche durch gestrichelt dargestellte Einheits-Informationsübertragungsleitungen 37 vervollständigt ist. In die von der Navigationsanlage 31 gespeiste Ringleitung 37 sind all diejenigen Anlagen bzw. in diesen angeordneten Datenverarbeitungsgeräte einbezogen, welche auf Signale bzw. Informationen aus der Navigationsanlage 31 angewiesen sind.

Es handelt sich hierbei in erster Linie um die Befehlsstellenanlage 11, dann aber auch um die Feuerleitanlagen 19 bis 25, die Kommunikationszentralenanlagen 29, 28 sowie die Raketenwaffenanlagen 12, 13, 26 und 27. Während sämtliche, Informationen aus der Navigationsanlage 31 benötigenden Anlagen durch die Einheits-Informationsübertragungsleitungen 37 zu einem einzigen Ring zusammengefaßt sind, ist die Befehlsstelle 11 durch eine separate Einheits-Informationsübertragungsleitung 37' mit der Navigationsanlage 31 verbunden.

Die Raketenwaffen 12, 13, 26 bzw. 27 benötigen die Navigationssignale als Referenz für den Raketenstart.

Aus der vorstehenden Beschreibung geht hervor, daß sich die
einzelnen Funktionsgruppen teilweise überlappen. So gehören
beispielsweise die Waffenanlagen 12, 13 und die Feuerleitanlagen 19 bis 22 sowohl zu der durch die Ringleitung 34 verbundenen ersten Funktionsgruppe als auch zu der durch die Ringleitung
37 verbundenen vierten Funktionsgruppe.

Obwohl                zwischen den Datenverarbeitungsgeräten
benachbarter Anlagen (z.B. 19, 20) grundsätzlich nur eine Einheits-Informationsübertragungsleitung erforderlich ist, ist doch
die im Beispiel der Anlagen 19, 20 zwei Leitungen (34, 37) erfordernde Zusammenfassung zu Funktionsgruppen bevorzugt, weil
im Falle des Ausfalls einer der beiden Leitungen 34, 37 die
andere, intakt bleibende Leitung die Datenübertragung übernehmen
kann, was zwar nur mit einer geringeren Geschwindigkeit möglich
ist, aber das gesamte System intakt läßt.

Die Datenverarbeitungsgeräte sind also so auszubilden, daß beim
Ausfall einer Leitung die verbleibende Leitung bzw. die verbleibenden Leitungen die Informationsübertragung übernehmen.

Eine Redundanz kann außer durch sternförmig zusätzlich vorgesehene Einheits-Informationsübertragungsleitungen auch durch
Parallelschaltung mehrerer Einheits-Informationsübertragungsleitungen erfolgen, welche zweckmäßigerweise räumlich an unterschiedlichen Stellen verlegt werden.

Der Übersichtlichkeit halber sind die Stromversorgungsleitungen
für die einzelnen Anlagen in der Zeichnung nicht dargestellt.
Sie sind in klassischer Weise angeordnet und verlegt.

Am Container der Waffenanlage 13 ist beispielsweise eine
Tastatur 38 angeordnet, welche auch an sämtlichen anderen
Waffenanlagen vorhanden sein kann und dazu dient, die
Waffe beim Ausfall der Befehlszentrale und/oder der Feuerleitanlagen von Hand zu bedienen. Dies ist möglich, weil in jeder
Waffe ein eigenes Datenverarbeitungsgerät, im Beispiel der
Waffe 13, das Datenverarbeitungsgerät 13' vorgesehen ist,
welches die für die betreffende Waffe erforderlichen Korrekturen,
Begrenzungen etc. vornimmt. Bei einem Ausfall der Operationszentrale kann also die Waffe noch von Hand weiterbedient
werden.

Beispielsweise mit Hilfe von Steckkarten kann auch jede einzelne Waffenanlage jederzeit getestet werden.

Außer den Kabelanschlüssen für die Einheits-Informationsübertragungsleitungen sind an den einzelnen Anlagen nur noch Steckkontakte für die Stromversorgung und gegebenenfalls eine Sprechverbindung vorgesehen.

Aufgrund der Anordnung von Datenverarbeitungsgeräten in jeder
Waffenanlage ist es auch gleichgültig, ob die einzelne Anlage
analog oder digital arbeitet, weil in jedes Datenverarbeitungsgerät ohne weiteres auch die erforderlichen Analog-Digital-
Wandler eingebaut werden können, soweit dies erforderlich ist.

Die Ringleitung 35 für die Zuführung der Navigationssignale
zu den einzelnen Anlagen erweist sich als besonders vorteilhaft,
weil bisher beispielsweise vom Kompaß des Schiffes zu den
einzelnen Anlagen bis zu 80 Kabel verlegt werden mußten, was
jetzt durch eine einzige Ringleitung ersetzt wird.

Wird irgendein Anlagencontainer durch einen neuen oder modernisierten ersetzt, so müssen lediglich die Steckkontakte der
alten Containers gelöst werden, worauf der alte Container
herausgenommen und ein neuer Container mit einer neuen Anlage
eingesetzt wird. Dieser weist die gleichen Anschlußkontakte und -buchsen wie der alte Container auf, so daß nach dem
Einbau lediglich die Steckverbindungen wieder angebracht
werden müssen. Das gesamte System ist dann sofort wieder
funktionsfähig. Irgendwelche Unterschiede der neuen Anlage
gegenüber der alten werden durch entsprechende Ausbildung
des Datenverarbeitungsgerätes der neuen Anlage berücksichtigt.

Die in den erfindungsgemäßen Anlagen verwendeten Datenverarbeitungsgeräte empfangen von den und liefern an die Einheits-
Informationsübertragungsleitungen ausschließlich digitalisierte
Signale.

Kampfschiff mit Funktionseinheitsanlagen

_____

P a t e n t a n s p r ü c h e

1. Kampfschiff mit einzelnen Funktionseinheitsanlagen, wie
Waffen-, Feuerleit-, Beleuchtungs- und/oder Ortungsanlagen
und einer zentralen Befehlsstellenanlage, welche jeweils
einen Container, vorzugsweise einen Einheitscontainer, mit
darin, darauf und/oder darüber angeordnetem Gerät umfassen,
von denen zumindest einige oben durch Einheitsplattformen abgeschlossen sind, die lösbar auf jeweils eine Öffnung im
Schiffsdeck umschließenden Einheitsfundamenten angeordnet
sind, wobei an jeder Funktionseinheitsanlage von einem
oder mehreren Generatoren kommende elektrische Stromversorgungsleitungen und/oder mit der zentralen Befehlsstellenanlage und mit anderen Funktionseinheitsanlagen
verbundene Informationsübertragungsleitungen münden,
welche an die jeweilige Anlage anschließbar sind, und wobei einander zugeordnete steuernde und gesteuerte Anlagen
Funktionsgruppen bilden und an vorbestimmter Stelle im
Schiff, insbesondere an vorbestimmten Einheitsplattformen
angeordnet sind, dadurch  g e k e n n z e i c h n e t ,
daß unabhängig von der Art der an den einzelnen Einheitsplattformen angeordneten Anlagen zwischen den Funktionseinheitsanlagen einer Funktionsgruppe Einheits-Informationsübertragungsleitungen verlegt sind und daß innerhalb jeder Funktionseinheitsanlage (11, 12 bis 31) ein
Datenverarbeitungsgerät (11', 11", 12' bis 31') vorgesehen
ist, welches die abzugebenden Informationen in eine für
die Übertragung über die Einheits-Informationsübertragungsleitung geeignete Form und die über die Einheits-Informationsübertragungsleitung empfangenen Informationen in
eine für die Verarbeitung in der Funktionseinheitsanlage
(11, 12 bis 31) geeignete Form bringt.

2. Kampfschiff nach Anspruch 1, dadurch  g e k e n n -
z e i c h n e t , daß das Datenverarbeitungsgerät (11',
11", 12' bis 31') jeder Anlage (11, 12 bis 31) über die
Einheits-Informationsübertragungsleitungen lediglich
die nur von den zugeordneten Anlagen der Funktionsgruppe
erhältlichen Informationen empfängt und alle für die Anlage
selbst spezifischen Daten in einem Speicher des Datenverarbeitungsgerätes gespeichert wird.

3. Kampfschiff nach Anspruch 2, dadurch  g e k e n n -
z e i c h n e t , daß an jeder gesteuerten Anlage eine
Tastatur für die Handsteuerung vorgesehen ist.

4. Kampfschiff nach einem der vorhergehenden Ansprüche,
dadurch  g e k e n n z e i c h n e t , daß die Einheits-
Informationsübertragungsleitungen alle Anlagen einer
Funktionsgruppe zu einem Ring verbinden.

5. Kampfschiff nach Anspruch 4, dadurch   g e k e n n z e i c h - n e t , daß zwischen bestimmten Anlagen einer Funktionsgruppe und/oder der Befehlsstellenanlage (11) zusätzliche Einheits-Informationsübertragungsleitungen verlegt sind.

6. Kampfschiff nach einem der vorhergehenden Ansprüche, dadurch g e k e n n z e i c h n e t , daß mehrere Einheits-Informationsübertragungsleitungen elektrisch parallel, jedoch räumlich getrennt verlegt sind.

7. Kampfschiff nach einem der vorhergehenden Ansprüche, dadurch g e k e n n z e i c h n e t , daß die Datenverarbeitungsgeräte so ausgebildet sind, daß jede der mehreren Einheits-Informationsübertragungsleitungen zwischen zu unterschiedlichen Funktionsgruppen gehörenden Anlagen die Gesamtinformationsübertragung übernehmen kann.

8. Kampfschiff nach einem der vorhergehenden Ansprüche, dadurch g e k e n n z e i c h n e t , daß die Feuerleitanlagen (19 bis 22) für die Überwasser-Waffenanlagen (12 bis 18) sowie die Befehlsstellenanlagen (11) eine erste Funktionsgruppe bilden.

9. Kampfschiff nach Anspruch 8, dadurch   g e k e n n z e i c h - n e t , daß bei mehreren, insbesondere vier Feuerleitanlagen (19 bis 22) von einigen, insbesondere zwei (19, 22) dieser Feuerleitanlagen mindestens eine Einheits-Informationsübertragungsleitung direkt zur Befehlsstellenanlage (11) verläuft.

10. Kampfschiff nach Anspruch 8 oder 9, dadurch   g e k e n n - z e i c h n e t , daß bei mehreren, insbesondere sieben Überwasser-Waffenanlagen (12 bis 18) von einigen, insbesondere zwei (15, 16) dieser Überwasser-Waffenanlagen mindestens eine Einheits-Informationsübertragungsleitung direkt zur Befehlsstellenanlage (11) verläuft.

11. Kampfschiff nach einem der vorhergehenden Ansprüche, dadurch
    g e k e n n z e i c h n e t , daß die Feuerleitanlagen (23
    bis 25) für die Unterwasser-Waffen (26, 27) sowie die Befehlsstellenanlage (11) eine zweite Funktionsgruppe bilden.

12. Kampfschiff nach einem der vorhergehenden Ansprüche, dadurch
    g e k e n n z e i c h n e t , daß die Kommunikationsanlagen
    (28, 29, 30) sowie die Befehlsstellenanlage (11) eine dritte
    Funktionsgruppe bilden.

13. Kampfschiff nach einem der vorhergehenden Ansprüche, dadurch
    g e k e n n z e i c h n e t , daß die Feuerleitanlagen (19
    bis 25), die Befehlsstellenanlage (11) und eine Navigationsanlage
    (31) eine vierte Funktionsgruppe bilden.

14. Kampfschiff nach Anspruch 13, dadurch   g e k e n n z e i c h -
    n e t , daß zu der vierten Funktionsgruppe auch die Raketen-
    (12, 13, 26) und/oder Torpedo- (27) Anlagen und gegebenenfalls wenigstens eine Kommunikationsanlage (28) gehören.

15. Kampfschiff nach einem der vorhergehenden Ansprüche, dadurch
    g e k e n n z e i c h n e t , daß die Datenverarbeitungs-
    geräte Analog-Digital-Wandler enthalten.

16. Kampfschiff nach einem der vorhergehenden Ansprüche, dadurch
    g e k e n n z e i c h n e t , daß ein Landanschluß (32)
    vorgesehen ist, über den einige oder alle Funktionsgruppen
    an einen externen Simulations-, Diagnose- und/oder Auswerte-
    rechner anschließbar sind.

0082539

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | COMPUTER DESIGN, Band 19, Nr. 10, Oktober 1980, Seiten 14-36, Concord, Massachussetts, USA. R. MAURIELLO: "A distributed processing system for military applications- part 2: the serial data bus" * Insgesamt * | 1,2,4-6,16 | F 41 G 5/20 B 64 G 1/00 H 04 L 11/16 |
| A | ELECTRICAL COMMUNICATION, Band 55, Nr. 4, 1980, Seiten 304-311, Heidenheim, DE F. PANDOZY: "Shipboard optical fiber data multiplex system" * Insgesamt * | 1,4,6 | |
| A | US-A-3 080 514 (C.T. FOSS) | | |
| A | US-A-3 732 543 (E.Y. ROCHER et al.) | | RECHERCHIERTE SACHGEBIETE (Int. Cl. ³) |
| A | REVUE INTERNATIONALE DE DEFENSE, Band 10, Nr. 6, Dezember 1977, Interavia, Geneve, CH L.M. CUNNINGHAM: "Le système de conduite de tir Sea-Archer" | | F 41 G B 64 G H 04 L |

--- -/-

Der vorliegende Recherchenbericht wurde für alle Patentansprüche erstellt.

| Recherchenort DEN HAAG | Abschlußdatum der Recherche 14-03-1983 | Prüfer CHAIX DE LAVARENE C. |
|---|---|---|

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | IEEE TRANSACTIONS ON COMPUTERS, Band C-29, Nr. 5, Mai 1980, Seiten 385-391, New York, US HUSSEIN JAFARI et al.: "Simulation of a class of ring-structured networks" | | |
| | ----- | | |
| | | | RECHERCHIERTE SACHGEBIETE (Int. Cl. ³) |

Der vorliegende Recherchenbericht wurde für alle Patentansprüche erstellt.

| Recherchenort DEN HAAG | Abschlußdatum der Recherche 14-03-1983 | Prüfer CHAIX DE LAVARENE C. |
|---|---|---|

KATEGORIE DER GENANNTEN DOKUMENTEN
X  von besonderer Bedeutung allein betrachtet
Y  von besonderer Bedeutung in Verbindung mit einer anderen Veröffentlichung derselben Kategorie
A  technologischer Hintergrund
O  nichtschriftliche Offenbarung
P  Zwischenliteratur
T  der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument